(19) Europäisches Patentamt
European Patent Office
Office européen des brevets

(11) Numéro de publication : **0 545 824 A1**

(12) **DEMANDE DE BREVET EUROPEEN**

(21) Numéro de dépôt : **92403271.7**

(22) Date de dépôt : **03.12.92**

(51) Int. Cl.$^5$ : **C08G 18/68,** C08G 18/81, C08G 18/67

(30) Priorité : **05.12.91 FR 9115074**

(43) Date de publication de la demande : **09.06.93 Bulletin 93/23**

(84) Etats contractants désignés : **AT BE CH DE DK ES FR GB GR IE IT LI LU MC NL PT SE**

(71) Demandeur : **CRAY VALLEY SA**
**Tour Total, 24 cours Michelet**
**F-92800 Puteaux (FR)**

(72) Inventeur : **Suspene, Laurent**
**6902 West Waunakee Circle**
**Mequon, WI 53092 (US)**
Inventeur : **Nocq, Dany**
**30 Grande Rue**
**F-60130 Fournival (FR)**
Inventeur : **Dolle, Marianne**
**3 allée de la pierre taillée**
**F-60100 Creil (FR)**

(74) Mandataire : **Dubost, Thierry Pierre**
**Cray Valley SA, BP 22**
**F-60550 Verneuil en Halatte (FR)**

(54) **Compositions améliorées de résines polyesters insaturées pour moulage.**

(57) Composition pour moulage contenant au moins un prépolymère polyester insaturé, au moins un monomère éthyléniquement insaturé, au moins un isocyanate au moins bifonctionnel au moins une charge minérale et au moins un agent bloquant de la fonction isocyanate. L'agent bloquant est un composé insaturé capable de régénérer la fonction isocyanate à une température ne dépassant pas 120°C environ et de participe à la formation du réseau tridimensionnel en se copolynérisant avec les doubles liaisons du monomère éthyléniquement insaturé et/ou du prépolymère polyester insaturé.
Application à un procédé de fabrication de pièces moulées.

EP 0 545 824 A1

La présente invention concerne la modification de résines polyester insaturées par des isocyanates bloqués, en vue d'obtenir des compositions pour moulage de propriétés améliorées.

Les résines polyester insaturés sont utilisées dans de nombreux domaines d'application, en particulier pour le moulage d'objets renforcés par des fibres de verre. Elles sont largement mises en oeuvre pour la fabrication de pièces automobiles, de matériels et d'accessoires de salle de bain, de coffres pour appareils électroniques, de coques de bateaux, d'ustensiles de cuisine et de pièces pour l'ameublement. Elles ont l'inconvénient de posséder, par rapport à d'autre polymères thermodurcissables, des propriétés mécaniques parfois insuffisantes notamment en termes de tenue à l'impact, ténacité et allongement à la rupture. Toutefois, on sait améliorer les propiétés mécaniques des résines polyester insaturées par l'introduction de polyisocyanate. Celui-ci réagit avec les fonctions alcool terminales du prépolymère polyester pour former des liaisons uréthanes qui ont la particularité d'améliorer la ténacité du réseau obtenu après polymérisation.

Le fait que les fonctions isocyanates réagissent instantanément avec les fonctions hydroxyle du polyester ne permet pas de stocker le mélange réactif polyester-isocyanate dans un récipient unique. Il a donc été préconisé l'utilisation de divers composés pour réaliser le blocage des groupes isocyanates. On sait que lorsqu'un polymère à groupes terminaux isocyanates bloqués est chauffé, il se produit une réaction de déblocage et la libération du composé utilisé pour réaliser le blocage des groupes isocyanates. Ainsi le brevet FR-A-2 568 884 décrit des compositions polymères comprenant :

- un polyuréthane, tel qu'obtenu par réaction d'un diamine primaire comme allongeur de chaîne avec un prépolymère du type polyéther ou polyester à fonctions isocyanates bloquées par un cetoxime contenant des doubles liaisons, et
- un polymère de ladite cétoxime.

Il est précisé par ce document que la réaction de déblocage s'effectue lorsqu'on chauffe, à une température de l'ordre de 60°C à 120°C, le mélange de prépolymère bloqué avec la diamine primaire. L'oxime vinylique utilisée pour le blocage est alors libérée et polymérisée puis, de préférence, le polymère obtenu est ultérieurement réticulé.

Par ailleurs, le brevet FR-A-2,293,460 décrit un procédé de fabrication de revêtements thermodurcissables suivant lequel un isocyanate bloqué et au moins bifonctionnel est incorporé dans un polymère à groupements hydroxyle libres, caractérisé en ce que l'isocyanate est bloqué par un ester de l'acide hydroxamique ou un hydroxamate d'acyle. Dans un tel procédé, un isocyanate ainsi bloqué se débloque à peu près complètement en moins de 30 minutes environ à une température d'environ 130-140°C.

Le problème que la présente invention s'est proposée de résoudre consiste donc à améliorer les propriétés de résines polyesters insaturés pour moulage par l'introduction d'un polyisocyanate et d'un agent bloquant de l'isocyanate qui ne demeure pas au sein du réseau après le blocage de l'isocyanate et tel que ce déblocage intervienne avec une cinétique favorable à basse température.

Pour pallier à l'impossibilité de stockage des mélanges réactifs polyester-polyisocyanate dans un récipient unique, la présente invention a donc pour objet une composition pour moulage contenant au moins un prépolymère polyester insaturé, au moins un monomère éthyléniquement insaturé, au moins un isocyanate au moins bifonctionnel, au moins une charge minérale et au moins un agent bloquant de la fonction isocyanate caractérisée en ce que ledit agent bloquant est un composé insaturé capable de régénérer la fonction isocyanate à une température ne dépassant pas 120°C environ et de participer à la formation du réseau tridimensionnel en se copolymérisant avec les doubles liaisons du monomère éthyléniquement insaturé et/ou du prépolymère polyester insaturé. Dans la mesure où l'agent bloquant a réagi chimiquement lors de la formation du réseau, les problèmes de plastification et d'un relargage éventuel à haute température sont supprimés.

La composition selon l'invention, stable à température ambiante, conduit sous l'action conjointe d'une élévation de température et de la décomposition de radicaux, à la formation d'un réseau hybride polyester-polyuréthane. Sa mise en oeuvre permet d'obtenir après moulage des produits finis possédant d'excellentes propriétés mécaniques en termes de module de flexion, contrainte à la rupture, tenue à l'impact et tenue thermique.

Des résultats favorables ont été obtenus, par l'emploi, comme agent bloquant de la fonction isocyanate, d'hydroxamates ayant la formule générale suivante :

$$R_1 - \overset{\overset{O}{\|}}{C} - NH - O - (\overset{\overset{O}{\|}}{C})_n — R_2$$

dans laquelle n = 0 ou 1, $R_1$ et $R_2$ représentant chacun un groupement hydrocarboné ayant de 1 à 20 atomes

de carbone et l'un au moins de $R_1$ et $R_2$ comportant au moins une insaturation éthylénique . $R_1$ et $R_2$ peuvent être des groupement alcoyle, aralcoyle, aryle ou cycloalcoyle, porteurs de une ou plusieurs insaturations éthyléniques et, le cas échéant, de substituants comme par exemple des atomes d'halogéne (fluor, chlore, brome ou iode), des groupements nitro, cyano et/ou alkoxy.

De tels composés dont la préparation est décrite dans le brevet FR-A-2,293,460, sont capable de régénérer la fonction isocyanate à une température de 70°C à 100°C environ en un temps de une minute environ à quelques heures. Comme exemples particulièrement efficaces on peut citer les méthacrylohydroxamates de benzyl et d'allyle.

Le polyisocyanate organique utilisable dans les compositions moulables selon l'invention peut être bifonctionnel, trifonctionnel et jusqu'à hexafonctionnel. Il peut être aliphatique, cycloaliphatique et/ou aromatique. Comme exemple on peut citer notamment le 4,4'-diphénylméthane diisocyanate, le 2,4- et le 2,6-toluènediisocyanate, l'isophorone diisocyanate, le tétraméthylène diisocyanate, le pentaméthylène diisocyanate, l'hexaméthylène diisocyanate, le 4,4'-dicyclohexylméthane diisocyanate et le polyméthylène polyphénylisocyanate. Il peut aussi être utilisé sous forme de prépolymère du type polyurée ou polyuréthane de faible poids moléculaire, c'est-à-dire en faisant réagir l'un des polyisocyanates désignés ci-dessus avec une polyamine ou polyol de faible poids moléculaire. Dans ce dernier cas on préfère utiliser un alkylène glycol tel que le dipropylène glycol, le tripropylène glycol, le diéthylène glycol, le triéthylène glycol, le tétraéthylèneglycol, le néopentylglycol, le 1,2- et le 1,3-butylène glycols. Il peut encore être utilisé sous forme d'urétonimine en chauffant l'un des polyisocyanates désignés ci-dessus à température élevée en présence d'un catalyseur phosphore de manière à former un polycarbodiimide puis en faisant réagir ce dernier avec un autre groupe isocyanate, par exemple comme décrit dans le brevet US-A-4 014 935.

Par résine polyester insaturée au sens de la présente invention on entend le produit de polycondensation d'acide ou anhydrides poly-carboxyliques a, b- éthyléniquement insaturés, le cas échéant en mélange avec des acides ou anhydrides polycarboxyliques saturés, et d'alcools poly-hydriques ou d'oxydes d'alkylène.

Des acides ou anhydrides polycarboxyliques insaturés utilisables comprennent notamment les acides maléique, fumarique, chloromaléique, citraconique, métaconique, itaconique, tétraconique ou similaires ou, lorsqu'ils existent, les anhydrices correspondants. Des acides ou anhydrides polycarboxyliques saturés utilisable pour remplacer partiellement, par exemple jusqu'à 95 % en moles environ, et de préférence jusqu'à 45 % en moles environ, les acides ou anhydrides insaturés, comprennent notamment les acides orthophtalique, isophtalique, téré-phtalique, succinique, méthylsuccinique, adipique, sébacique, tétrabromo-phtalique, tétrachlorophtalique, glutarique, pimélique ou similaires ou, lorsqu'ils existent, les anhydrides correspondants.

Parmi les alcools polyhydriques utilisables, on préfère généralement les diols aliphatiques saturés tels que l'éthylène glycol, le propylène glycol, le butylène glycol, le diéthylène glycol, le dipropylène glycol, le triéthylène glycol, le tétraéthylène glycol, le 1,3-butanédiol, le 1,4-butanédiol, le tripropylèneglycol, le pentanédiol, l'hexanédiol et le néapentylglycol. Le bisphénol A et ses dérivés alcoxylés, ainsi que d'autres polyols aromatiques peuvent également être utilisés. Les oxydes d'éthylène et de propylène sont également utilisables.

Lorsque la résine polyester insaturée est préparée à partir d'anhydride maléique, il est avantageux d'effectuer leur préparation en présence de morpholine afin d'augmenter le taux d'isomérisation de fonction maléates en fonctions fumarates. La quantité de morpholine utilisée dans ce cas peut atteindre jusqu'à 1 % en poids, et est de préférence comprise entre 0,1 % et 0,5 % en poids du polyester.

La masse moléculaire du polyester n'est pas critique et peut varier dans une gamme importante, généralement comprise entre 250 et 5000 environ et plus particulièrement entre 350 et 2500.

La fonctionnalité en groupement hydroxyle, exprimée par le rapport $f_{OH} = 2\ I_{OH}\ /\ I_A + I_{OH}$ dans lequel $I_A$ et $I_{OH}$ sont respectivement les indices d'acide et d'hydroxyle, doit être supérieure à 1 pour que la modification du réseau polyester par un isocyanate bloqué soit efficace.

Un autre composant de la composition pour moulage selon l'invention est le monomère éthylèniquement insaturé copolymérisable avec le polyester non saturé afin de générer une structure réticulée. Ce monomère peut être choisi parmi le styrène, les styrènes substitués comme le vinyltoluène, le tertio-butyl-styrène, l'alphaméthylstyrène, le chloro-styrène, le dichlorostryrène, les esters d'alkyle inférieur ($C_1$ à $C_8$) d'acide acrylique et d'acide méthacrylique, les acrylates et méthacrylates cycliques, comme ceux de cyclohexyle et de benzyle, les méthacrylates et acrylates bi-cycliques comme ceux d'isobornyle, le phtalate de diallyle, le maléate de diallyle, le fumarate de diallyle, le cyanurate de triallyle, l'acétate, le crotonate et le propionate de vinyle, le divinyléther, les diènes conjugués tels que le butadiène-1,3, l'isoprène, le 1,3-pentadiène, le 1,4-pentadiène, le 1,4-hexadiène, le 1,5-hexadiène, le 1-9-décadiène, le 5-méthylène-2-norbornène, le 5-vinyl-2-norbornène, les 2-alkyl-2,5-norbornadiènes, le 5-éthylidène-2-norbornène, le 5-(2(propenyl)-2-norbornène, le 5-(5-hexenyl)-2-norbornène, le 1,5-cyclooctadiène, le bicyclo [2,2,2] octa-2,5-diène, le cyclopentadiène, le 4,7,8,9-tétra-hydroindène et l'isopropylidène tétra-hydroindène, et les nitriles insaturés tels que l'acrylonitrile et le méthacrylonitrile ainsi que les (méth)acrylates de polyol comme les diacrylates et diméthacrylates de l'éthylèneglycol, du propylèneglycol, du 1,3-butanédiol, du 1,4-butanédiol, du 1,6-hexane-diol, du néopentyl-glycol, du 1,4-cyclo-hexane-diol, du 1,4-cyclo-hexane-diméthanol, du 2,2,4-trime-thyl-1,3-pentanédiol, du 2-éthyl-2-méthyl-1,3-propanédiol, du 2,2-diéthyl-1,3-propanédiol, du diéthylèneglycol, du dipropylèneglycol, du triéthylène-glycol, du tripropylèneglycol, du tétraéthylèneglycol, du tétrapropylène-glycol, du triméthyloléthane, du triméthylopropane, du glycérol, du penta-érythritol, les triacrylates et triméthacrylates du triméthyloléthane, du triméthylolpropane, du glycérol, du pentaérythritol, les tétraacrylates et tétraméthacrylates du pentaérythritol, les di(meth)acrylates à hexa(meth)-acrylates du dipentaérythritol, les poly(meth)acrylates de polyol mono- ou polyéthoxyles ou mono- ou polyproxylés tels que le triacrylate et triméthacrylate du triméthyol-propane triéthoxylé, du triméthylolpropane tripropoxylé, le triacrylate et le triméthacrylate du glycérol tripropoxylé, le triacrylate, le triméthacrylate, tétraacrylate et tétraméthacrylate du pentaérythritol tétraéthoxylé, et leurs mélanges en toutes proportions.

La composition pour moulage selon l'invention comprend également au moins une charge minérale. Celle-ci peut être pulvérulente, telle que carbonate de calcium, hydrate d'alumine, kaolin ou talc, et être présente à raison de 25 à 350 parties environ en poids pour 100 parties en poids du prépolymère polyester insaturé et du monomère éthyléniquement insaturé. La composition pour moulage selon l'invention peut également comprendre une charge minérale massive, telle que des billes ou fibres de verre, à raison de 5 à 40 % environ en poids du poids total de la composition selon l'invention.

On peut, afin de modifier les propriétés mécaniques de la résine polyester insaturée, incorporer dans la composition selon l'invention, des composés susceptibles de réagir avec les fonctions isocyanates régénérées et former ainsi un copolymère avec le prépolymère polyester insaturé. Dans ce cadre, on peut envisager d'utiliser des composés à groupements hydroxyles terminaux qui réagissent avec les groupements isocyanates pour former des liaisons uréthane comme par exemple des glycols aliphatiques ou aromatiques choisis parmi le 1,2-propanédiol(propylène-glycol), le dipropylène glycol, le diéthylène-glycol, l'éthylène-glycol, le 1,3-butanédiol, le 1,4-butanédiol, le néopentyl-glycol, le triéthylène-glycol, le tripropylène-glycol, l'hydroxyéthyl éther hydroquinone, le bisphénol A éthoxylé, le bisphénol A propoxylé. On peut aussi utiliser des polymères à groupements hydroxyle libres comme des polyesters saturés, tels que la polycaprolactone, des polyesters-amides, des polyamides contenant des groupements hydroxyles, des polyéthers et polythioéthers à groupements hydroxyles terminaux, des résines phénolaldéhyde, des résines urée-aldéhyde et des résines époxy. On peut aussi utiliser des composés possédant des fonctions amines qui réagissent avec les fonction isocyanates pour former des liaisons urée comme par exemple le diaminodiphénylméthane, l'isophorone diamine, le diaminodiphényl-sulphone, le méthylène-bis-4,4'(2,6-diisopropylaniline), le méthylène-bis-4,4(2,6 diéthylaniline), le diéthyldiaminotoluène, le méthylène-bis-4,4'-(éthyl-2-méthyl-6-aniline), le triméthylène glycol di-p-aminobenzoate, le méthylène-bis-5-5'-(2 amino-o-méthyl benzoate), et l'isobutyl-4-chloro-3,5-diaminobenzoate, des polymères porteurs de fonctions amines et la poly (oxytétraméthylène) di-p-aminobenzoate.

La composition pour moulage selon l'invention comprend en outre de préférence au moins un agent capable de former des radicaux à une température supérieure ou égale à la température de déblocage (régénération de la fonction isocyanate) de l'isocyanate bloqué. Comme agents appropriés, on peut citer entre autres des péroxydes organiques, peroxydicarbonates et peroxyesters tels que le peroxyde de benzoyle, l'hydroperoxyde de butyle tertiaire, le peroxyde de butyle tertiaire, le peroxyde de dicumyle, le 2,2 bis (ter-butylperoxy) butane, le paracétal, le 1,1-bis (t-butylperoxy) 3,3,5-triméthyl cyclohexane, le perbenzoate de butyle tertiaire, le peroxyoctoate de butyle tertiaire, le ter-butyl peroxy isopropylcarbonate, le perisononanoate de butyle tertiaire, le permaléinate de butyle tertiaire, le péracétal cyclique, le 2,5-diméthyl-2,5-bis (2-ethylhexolperoxy) hexane, le peroxyde de méthyléthylcétone, le péroxyoctoate de tertioamyle, le 2,5-dipéroxy-octoate, ou encore le peroxyde de 2,4-pentanédione.

La composition pour moulage selon l'invention peut en outre comprendre :

- une quantité efficace d'au moins un inhibiteur de réticulation. Comme exemples d'inhibiteurs de réticulation utilisables, on peut citer notamment la phénothiazine, l'éther méthylique de l'hydroquinone, la N,N-diéthylhydroxyamine, le nitrobenzène, le di-tertiobutylcatechol, l'hydroquinone, le p-anilinophénol, le phosphite, de di-(2-éthylhexyl)-octylphényle, le 2,5-ditertiobutyl-4-hydroxytoluène, le bleu de méthylène et leurs mélanges en toutes proportions. Une quantité efficace d'inhibiteur de réticulation est généralement comprise entre 0,01 % et 0,2 % en poids de résine polyester insaturée.
- au moins un catalyseur de formation d'uréthane, tel que le dibutyldilaurate d'étain.
- au moins un catalyseur de réaction des fonctions isocyanates avec la résine polyester insaturée, qui peut être choisi parmi :

  (a) des amines tertiaires telles que le bis (diméthylaminoéthyl) éther, le triméthylamine, la triéthylamine, la N-méthylmorpholine, la N-éthylmorpholine, la N,N-diméthylbenzylamine, la N,N-diméthyl-éthanolamine, la N,N,N',N'-tétraméthyl-1,3-butanediamine, la triéthylanolamine, le 1,4-diazabicyclo [2.2.2.]

octane et l'oxyde de pyridine.

(b)des phosphines tertiaires telles que les trialkylphosphines et les dialkylbenzylphosphines,

(c) des bases fortes telles que les hydroxyles, alcoolates et phénolates de métaux alcalins et alcalino-terreux,

(d) des sels métalliques d'acides forts tels que les chlorures ferrique, stannique, stanneux et de bismuth, le trichlorure d'antimoine et le nitrate de bismuth,

(d) des chélates tels que ceux pouvant être obtenus à partir d'acétylacétone, de benzoylacétone, de trifluoroacétylacétone, d'acétoacétate d'éthyle, de salicylaldéhyde, de cyclopentanone-2-carboxylate, d'acétylacétoimine, de bis-acétylacétonealkylènediimines, de salicylaldéhydeimine et à partie de métaux tels que le beryllium, le magnésium, le zinc, le cadmium, le plomb, le titane, le zirconium, l'étain, l'arsenic, le bismuth, le chrome, le molybdène, le manganèse, le fer, le cobalt et le nickel,

(f) les alcoolates et phénolates de métaux tels que $Ti(OR)_4$, $Sn(OR)_4$, $Sn(OR)_2$ et $Al(OR)_3$ dans lesquels R est un groupe alkyle ou aryle,

(g) des sels d'acides organiques et des métaux tels que les alcalins et alcalino-terreux, l'aluminium, l'étain, le plomb, la manganèse, le cobalt, le nickel et le cuivre, par exemple l'acétate de sodium, la laurate de potassium, l'hexanoate de calcium, les acétate, octoate et oléate stanneux, l'octoate de plomb, les naphténates de manganèse et de cobalt, et

(h) les métaux carbonyles de fer et du cobalt et les dérivés organométalliques de l'étain tétravalent, de l'arsenic trivalent et pentavalent, de l'antimoine et du bismuth ; parmi ces dérivés on préfère plus particulièrement les sels de dialkylétain d'acides carboxyliques tels que le diacétate de dibutylétain, le dilaurate de dibutylétain, le maléate de dibutylétain, le diacétate de dilaurylétain, le diacétate de dioctylétain, le bis (4-méthylaminobenzoate) de dibutylétain, le bis (6-méthylaminocaproate) de dibutylétain, les hydroxydes de trialkylétain, les oxydes de dialkylétain, les dialcoxydes de dialkylétain et les dichlorures de dialkylétain.

Ce catalyseur est généralement utilisé à raison de 0,01 à 2 % en poids du polyisocyanate présent dans le premier mélange.

- au moins un retardateur de flamme tel qu'un hydrate d'alumine,
- au moins un pigment organique ou minéral, et
- au moins une résine thermoplastique non réactive, telle que polystyrène ou polyméthacrylate de méthyle, capable de réduire le phénomène de retrait de la résine polyester insaturée chargée pendant le moulage. Une telle résine peut être introduite sous forme de solution dans un monomère tel que le styrène.
- au moins un agent thixotropique tel que le silice colloïdale ou l'argile pyrolisée à raison de 0,5 à 1,5 en poids environ pour 100 parties de composition.

Dans la composition pour moulage selon l'invention, les proportions des composants, pour 100 parties en poids de prépolymère polyester insaturé, sont généralement les suivantes :

- de 50 à 300 parties en poids environ de monomère éthyléniquement insaturé,
- une quantité d'isocyanate au moins bifonctionnel telle que le rapport molaire des fonctions isocyanates aux fonctions hydroxyles du prépolymère polyester insaturé soit compris entre 0,8 et 1,2 environ, et
- une quantité d'agent bloquant telle que le rapport molaire des fonctions bloquantes aux fonctions isocyanates soit au moins égal à 1.

Un second objet de la présente invention consiste en un procédé de fabrication de pièces moulées en résine polyester insaturé chargée, caractérisé en ce qu'une composition telle que décrite précédemment est portée, dans un moule, à une température suffisante et pendant une durée suffisante pour régénérer la fonction isocyanate et former un réseau tridimensionnel. Le procédé selon l'invention peut être appliqué avec succès pour l'obtention de pièces composites thermodurcies soit par la technique du moulage en feuille (dit SMC) soit par la technique du moulage dans le masse (dit BMC), soit par la technique de moulage par transfert de résine (dit RTM) soit par la technique de réaction-injection-moulage (dit RIM). La durée du procédé de moulage selon l'invention est bien sûr fonction de la nature particulière de l'agent bloquant choisi et de la température choisie. Elle est généralement comprise entre 0,5 et 30 minutes environ, notamment dans le cas où l'agent bloquant est un hydroxamate tel que décrit précédemment. La température utilisée pendant le procédé de moulage selon l'invention est généralement au moins égale à 70°C et peut atteindre, par exemple de manière graduelle, jusqu'à 200°C environ. Le procédé selon l'invention peut être mis en oeuvre dans une machine de moulage fonctionnant sous une pression de 20 à 200 bars environ.

De manière plus spécifique, lorsque le procédé selon l'invention consiste à mouler une composition moulage en feuilles, il comprend généralement les étapes suivantes :

(a) préparation d'un mélange comprenant au moins une charge minérale en poudre, au moins une résine polyester insaturée, au moins un monomère éthyléniquement insaturé, au moins un polyisocyanate organique, et au moins un agent capable de former des radicaux libres,

(b) distribution simultanée, dans une installation de production de feuilles, du mélange préparé à l'étape (a) d'une part et de fibres de verre longues d'autre part de manière à obtenir à la sortie de l'installation des feuilles de consistance pâteuse pouvant être coupées à la longueur désirée.

(c) maintien des feuilles obtenues à l'étape (b) à une température comprise entre 20°C et 50°C environ pendant au moins environ 12 heures de manière à obtenir la stabilisation de leur viscosité,

(d) transfert des feuilles de viscosité stabilisée obtenues à l'étape (c) vers un moule, et

(e) moulage des feuilles par compression à une température comprise de préférence entre 100°C et 180°C environ pendant une durée suffisante pour provoquer la réticulation de la résine polyester insaturée par le monomère éthylèniquement insaturé.

A l'issue de l'étape (e), le matériau réticulé peut en outre être soumis à une phase de post-réticulation à une température de préférence comprise entre 150 et 180°C environ et pendant une durée de préférence comprise entre 10 et 120 minutes environ. La durée de moulage de l'étape (e) dépend bien entendu des proportions des composants du mélange préparé à l'étape (a) ainsi que des dimensions et de l'épaisseur des feuilles mais est généralement comprise entre 1 et 10 minutes environ.

Lorsque le procédé selon l'invention consiste à mouler une composition moulable en masse, il comprend généralement les étapes suivantes :

(a) préparation d'un mélange comprenant au moins une charge minérale en poudre, au moins une résine polyester insaturée, au moins un monomère éthyléniquement insaturé, au moins un polyisocyanate organique, et au moins un agent capable de former des radicaux libres,

(b) distribution simultanée, dans une installation de mélange, du mélange préparé à l'étape (a) d'une part et de fibres de verre courte d'autre part,

(c) transfert de la composition moulable obtenue à l'étape (b) vers un moule, et

(d) moulage de la composition à une température comprise de préférence entre 100°C et 180°C environ pendant une durée suffisante pour provoquer la réticulation de la résine polyester insaturée par le monomère éthyléniquement insaturé.

A l'issue de l'étape (d), le matériau réticulé peut en outre être soumis à une phase de post-réticulation à une température de préférence comprise entre 150 et 180°C environ et pendant une durée de préférence comprise entre 10 et 120 minutes environ. La durée de moulage de l'étape (d) dépend bien entendu des proportions des composants du mélange préparé à l'étape (a) ainsi que des dimensions de la pièce moulée à produire mais est généralement comprise entre 1 et 10 minutes environ.

Ce procédé peut être mis en oeuvre de manière discontinue pour le moulage de BMC, auquel cas les étapes (a) et (b) peuvent être combinées en une seule étape, les fibres de verre courtes (dans ce cas, de taille ne dépassant de préférence pas 6 mm) étant introduites dans un mélangeur en même temps que les autres ingrédients de la composition moulable. Il peut également être mis en oeuvre de manière continue pour le moulage de compositions imprégnables en continu (encore désignées CIC d'après l'abréviation anglaise correspondante), auquel cas l'étape (b) est distincte de et consécutive à l'étape (a) et il est préférable que, entre les étapes (b) et (c), la composition soit maintenue à une température comprise entre 20° et 50°C environ pendant au moins 12 heures environ de manière à stabiliser leur viscosité. Dans l'une et l'autre variante -continue ou discontinue-, le moulage au cours de l'étape (d) peut être effectué soit par injection soit par compression.

Enfin un dernier objet de la présente invention consiste en des pièces moulées en résine polyester insaturée chargée obtenues à partir des compositions selon l'invention (telles que décrites précédemment) ou par la mise en oeuvre du procédé de fabrication décrit précédemment.

Les exemples suivants sont donnés à titre illustratif et non limitatif de la présente invention. Sauf indication contraire, toutes les quantités de matière sont exprimées en parties en poids.

Les différents polyesters insaturés utilisés dans les exemples ci-après sont les suivants :

Polyester I

Il est obtenu par polycondensation de 98 parties d'anhydride maléique et de 84 parties de propane-diol jusqu'à obtenir une masse moléculaire moyenne en nombre de 1500. Son indice d'acide est de 31 et son indice d'hydroxyle de 53. Il est ensuite dilué dans le styrène jusqu'à un extrait sec de 66 % en présence d'hydroquinone utilisée comme inhibiteur.

Polyester II

Il est obtenu par polycondensation de 98 parties d'anhydrides maléique et de 101 parties de propane-diol jusqu'à obtenir une masse moléculaire moyenne en nombre de 1500. Son indice d'acide est de 8 et son indice

d'hydroxyle de 72. Il est ensuite dilué dans le styrène jusqu'à un extrait sec de 70 % en présence d'hydroquinone utilisée comme inhibiteur.

Polyester III

Il est obtenu par polycondensation de 88 parties d'anhydride maléique, de 99 parties d'acide isophtalique et de 174 parties de diéthylène glycol jusqu'à obtenir une masse molaire moyenne de 2800 environ. Son indice d'acide est de 5 et son indice d'hydroxyle de 35. Il est ensuite dilué dans le styrène jusqu'à un extrait sec de 65 % en présence d'hydroquinone utilisée comme inhibiteur.

Exemple 1 (comparatif)

A 100 parties du polyester I, on ajoute 200 parties de craie (Ca $CO_3$), 0,002 partie de parabenzoquinone, 1,5 partie de perbenzoate de tertiobutyle. Ce mélange est agité vigoureusement puis coulé dans un moule de compression. La réticulation est alors effectuée en portant la température jusqu'à 150°C sous une pression de 100 bars pendant 5 minutes.

La température de transition vitreuse du réseau obtenu est déterminée par des mesures viscoélastiques, en prenant la température du maximum du pic d'amortissement à une fréquence de 1 Hz. Les propriétés mécaniques statiques sont déterminées par un essai de flexion à trois points.

| | |
|---|---|
| Tg | 200°C |
| Module en flexion (NFT 51.001) | 8 300 MPa |
| Contrainte à la rupture en flexion (NFT 51.001) | 58 MPa |
| Choc Izod non entaillé (NFT 51.911) | 3,9 kJ/$m^2$ |

Exemple 2

Dans un réacteur maintenu à 80°C on introduit le polyester I. Puis, en coulée continue, on introduit le diphénylméthane diisocyanate de fonctionalité 2,7 commercialisé par DOW CHEMICAL sous la référence MDI M580)de façon à avoir deux moles disocyanate pour 1 mole de fonctions alcool du polyester. Lorsque toutes les fonctions alcool ont réagi, on introduit en proportion stoechiométrique le méthacrylohydroxamate de benzyle. La réaction est stoppée lorsque plus de 95% des fonctions isocyanates résiduelles ont été bloquées. Le mélange obtenu est refroidi à température ambiante. On ajoute alors une quantité de polyester I égale à la quantité initialement introduite dans le réacteur.

Exemple 3

A 100 parties de mélange réactif de l'exemple 2, on ajoute 100 parties de craie (Millicarb). 0.002 partie de parabenzoquinone, 1 partie de naphtenate de zinc et 1,5 partie de perbenzoate de butyle tertiaire. Ce mélange est agité vigoureusement puis coulé dans un moule de compression. On suit le déblocage de l'isocyanate puis sa réaction avec les fonctions hydroxyles libres du polyester au moyen d'un calorimètre différentiel à balayage : on observe à 100°C un pic correspondant à la température du déblocage de l'isocyanate. La réticulation s'effectue comme à l'exemple 1. Les propriétés obtenues sont les suivantes :

| | |
|---|---|
| Tg | 190°C |
| Module en flexion (NFT 51.001) | 9 800 MPa |
| Contrainte à la rupture en flexion (NFT 51.001) | 78 MPa |
| Choc Izod non entaillé (NFT 51.911) | 6 kJ/$m^2$ |

Exemple 4

On reproduit le mode opératoire de l'exemple 3, sauf que le perbenzoate de butyle tertiaire est remplacé

par une quantité équivalente de peroxyde ditertiobutyle. Les propriétés du matériau obtenu sont les suivantes :

| | |
|---|---|
| Tg | 190°C |
| Module en flexion (NFT 51.001) | 10 000 MPa |
| Contrainte à la rupture en flexion (NFT 51.001) | 90 MPa |
| Choc Izod non entaillé (NFT 51.911) | 6 kJ/$m^2$ |

Exemple 5

Dans un réacteur maintenu à 80°C, on introduit 555,2 g de styrène, 272 g de polyisocyanate, commercialisé par DOW CHEMICAL sous la référence MDI M 220, 183,2 g de méthacrylohydroxamate de benzyle et 0,15 g, de parabenzoquinone. Après 3 heures à 80°C, le mélange est refroidi à température ambiante où l'on vérifie par dosage chimique que les fonctions isocyanates ont été entièrement bloquées.

Exemple 6

On ajoute 232 g de l'isocyanate bloqué de l'exemple 5 à 500 g de polyester II. On ajoute alors 1464 g de Ca $CO_3$, 0,1 g de parabenzoquinone, 0,5 g en poids de naphténate de zinc et 0,75 g de peroxyde de ditertiobutyle. Ce mélange réactif est agité vigoureusement puis coulé dans un moule de compression. la réticulation est alors effectuée comme à l'exemple 1. Les propriétés obtenues sont les suivantes :

| | |
|---|---|
| Tg | 205°C |
| Module en flexion (NFT 51.001) | 9 700 MPa |
| Contrainte à la rupture en flexion (NFT 51.001 | 68 MPa |
| Choc Izod non entaillé | 5,5 kJ/$m^2$ |

Exemple 7

A 100 parties de polyester III, on ajoute 200 parties de craie et 1,5% de peroxyde ditertiobutyle. Le mélange est agité vigoureusement puis coulé dans un moule de compression. La réticulation est alors effectuée comme à l'exemple 1. La résistance au choc Izod non entaillé des plaques obtenues est égale à 8,4 kJ/$m^2$. Leur Tg est de 90°C.

Exemple 8

On mélange 85 parties en poids de polyester III et 15 parties en poids de polycaprolactone commercialisée par Interox Chemical sous la dénomination CAPA 212. A ce mélange, on ajoute la quantité nécessaire d'isocyanate bloqué de l'exemple 5 de façon à obtenir un rapport molaire des fonctions isocyanates bloquées/fonctions alcool égal à 1.

Au mélange obtenu, on ajoute 200 parties en poids de craie, 1 % en poids de naphténate de zinc et 1,5 de peroxyde de ditertiobutyle. Après polymérisation dans les conditions décrites précédemment, on obtient des plaques possédant les propriétés suivantes.

| | |
|---|---|
| Tg | 85°C |
| Choc Izod non entaillé | 11 kJ/$m^2$ |

**Revendications**

1. Composition pour moulage contenant au moins un prépolymère polyester insaturé, au moins un monomère éthyléniquement insaturé, au moins un isocyanate au moins bifonctionnel, au moins une charge minérale et au moins un agent bloquant de la fonction isocyanate caractérisée en ce que ledit agent bloquant est un composé insaturé capable de régénérer la fonction isocyanate à une température ne dépassant pas 120°C et de participer à la formation du réseau tridimensionnel en se copolymérisant avec les doubles liaisons du monomère éthyléniquement insaturé et/ou du prépolymère polyester insaturé.

2. Composition pour moulage selon la revendication 1, caractérisée en ce qu'on utilise comme comme agent bloquant de la fonction isocyanate, un hydroxamate ayant la formule générale suivante :

$$R_1 - \overset{\overset{\displaystyle O}{\|}}{C} - NH - O - (\overset{\overset{\displaystyle O}{\|}}{C})_n - R_2$$

dans laquelle n = 0 ou 1, $R_1$ et $R_2$ représentant chacun un groupement hydrocarboné ayant de 1 à 20 atomes de carbone et l'un au moins de $R_1$ et $R_2$ comportant au moins une insaturation éthylénique.

3. Composition pour moulage selon la revendication 2, caractérisée en ce que $R_1$ et $R_2$ sont choisis parmi des groupements alcoyle, aralcoyle, aryle ou cycloalcoyle, porteurs de une ou plusieurs insaturations éthyléniques et, le cas échéant, de substituants comme des atomes d'halogène, des groupements nitro, cyano et/ou alkoxy.

4. Composition pour moulage selon la revendication 2, caractérisée en ce que l'agent bloquant de la fonction isocyanate est choisi parmi les méthacrylohydroxamates de benzyle et d'allyle.

5. Composition pour moulage selon l'une des revendications 1 à 4, caractérisée en ce que la charge minérale est une charge pulvérulente présente à raison de 25 à 350 parties en poids pour 100 parties en poids du prépolymère polyester insaturé et du monomère éthyléniquement insaturé.

6. Composition pour moulage selon l'une des revendications 1 à 5, caractérisée en ce qu'elle comprend en outre une charge minérale massive présente à raison de 5 à 40 % en poids total de la composition.

7. Composition pour moulage selon l'une des revendications 1 à 6, caractérisée en ce qu'elle comprend en outre au moins un composé susceptible de réagir avec les fonctions isocyanates régénérées et former ainsi un copolymère avec le prépolymère polyester insaturé.

8. Composition pour moulage selon la revendication 7, caractérisée en ce que ledit composé est un glycol aliphatique ou aromatique.

9. Composition pour moulage selon la revendication 7, caractérisée en ce que ledit composé est un polymère à groupements hydroxyle libres choisi parmi les polyesters saturés, des polyesters-amides, des polyamides contenant des groupements hydroxyles, des polyéthers et polythioéthers à groupements hydroxyles terminaux, des résines phénol-aldéhyde, des résines urée-aldéhyde et des résines époxy.

10. Composition pour moulage selon la revendication 7, caractérisée en ce que ledit composé possède des fonctions amines.

11. Composition pour moulage selon l'une des revendications 1 à 10, caractérisée en ce qu'elle comprend en outre au moins un agent capable de former des radicaux à une température de déblocage de l'isocyanate bloqué.

12. Composition pour moulage selon l'une des revendications 1 à 11, caractérisée en ce qu'elle comprend, pour 100 parties en poids de prépolymère polyester insaturé :
   - de 50 à 300 parties en poids de monomère éthyléniquement insaturé,
   - une quantité d'isocyanate bifonctionnel telle que le rapport molaire des fonctions isocyanates aux fonctions hydroxyles du prépolymère polyester insaturé soit compris entre 0,8 et 1,2 et,
   - une quantité d'agent bloquant telle que le rapport molaire des fonctions bloquantes aux fonctions isocyanates soit au moins égal à 1.

**13.** Procédé de fabrication de pièces moulées en résines polyester insaturé chargée, caractérisée en ce qu'une composition selon l'une des revendications 1 à 12 est portée dans un moule à une température suffisante et pendant une durée suffisante pour régénérer la fonction isocyanate et former un réseau tridimensionnel.

**14.** Procédé de fabrication selon la revendication 13, caractérisé en ce que la durée de moulage est comprise entre 0,5 et 30 minutes.

**15.** Procédé de fabrication selon l'une des revendications 13 et 14, caractérisé en ce que la température de moulage est comprise entre 70°C et 200°C.

**16.** Pièces moulées en résine polyester insaturée chargée, obtenues à partir d'une composition selon l'une des revendications 1 à 12.

Office européen des brevets

# RAPPORT DE RECHERCHE EUROPEENNE

Numero de la demande

EP 92 40 3271

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,A | FR-A-2 293 460 (AKZO)<br>* revendications 1-9 *<br>* page 5, ligne 7 - ligne 30 *<br>* exemples 2,3 * | 1 | C08G18/68<br>C08G18/81<br>C08G18/67 |
| A | FR-A-2 568 884 (STEVENS-GENIN)<br>* revendications 1,3,6 *<br>* page 1, ligne 1 - ligne 4 * | 1 | |
| A | US-A-2 915 493 (G.NISCHK ET AL.)<br>* revendication 1 *<br>* colonne 2, ligne 29 - ligne 62 * | 1 | |

DOMAINES TECHNIQUES RECHERCHES (Int. Cl.5)

C08G

Le présent rapport a été établi pour toutes les revendications

| Lieu de la recherche | Date d'achèvement de la recherche | Examinateur |
|---|---|---|
| LA HAYE | 17 MARS 1993 | VAN PUYMBROECK M. A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)